# FASCICULE DE BREVET EUROPEEN

(11) **EP 1 326 313 B1**
(45) Date de publication et mention de la délivrance du brevet: **03.06.2009**
(21) Numéro de dépôt: 02293087.9
(22) Date de dépôt: 13.12.2002
(51) Int. Cl.: H02B 7/06

(54) **Ensemble moyenne tension associant un tableau mt et un transformateur**
Mittelspannungsanlage mit einem Schaltfeld und einemTransformator
Medium voltage assembly associating a switchboard and a transformer

(30) Priorité: 19.12.2001 FR 0116487
(43) Date de publication de la demande: 09.07.2003
(73) Titulaire: SOCIETE NOUVELLE TRANSFIX TOULON, 46000 Cahors (FR)
(72) Inventeur: Felix, Jean-Michel, 83390 Pierrefeu du Var (FR); Faltermeier, Jean-Francis, 83210 Sollies-Toucas (FR)
(74) Mandataire: Novagraaf IP

(56) Documents cités:
- DE-A- 2 138 895
- DE-A- 19 821 592
- DE-U- 1 826 674
- FR-A- 2 782 418

## Description

L'invention concerne un ensemble formé d'un transformateur moyenne tension / basse tension (MT/BT) et d'un tableau moyenne tension (MT) destiné à un poste de transformation électrique MT/BT.

Les postes de transformation électriques conventionnels sont constitués d'une enveloppe dans laquelle sont installés un tableau MT, un transformateur MT/BT et un tableau de distribution BT.

La demande de brevet français n°0103840 décrit un poste de transformation comprenant un transformateur MT/BT, convertissant la puissance électrique MT en puissance électrique BT, une enveloppe renfermant un appareillage MT raccordant le réseau MT audit transformateur, un tableau de répartition BT apte à alimenter les différents départs d'un réseau BT à partir dudit transformateur et des moyens de protection et de déconnexion du transformateur.

Un tableau MT comprend principalement :
- des organes de manoeuvre, tels qu'interrupteurs et sectionneurs, situés dans un premier compartiment étanche, contenant un diélectrique qui peut être un gaz isolant ;
- un ensemble de commandes mécaniques actionnant les organes de manoeuvre précédents, situé dans un second compartiment ;
- des moyens de raccordement au réseau électrique, situés dans un troisième compartiment accessible au personnel exploitant et fermé par un ou plusieurs capots démontables.

Pour prévenir les risques d'exploitation en cas de défaut d'isolement interne, le premier compartiment ou cuve comprend un dispositif de limitation de la pression interne permettant l'évacuation des gaz dus à un arc électrique. Ce dispositif peut être un point faible aménagé dans la paroi de la cuve, un disque de rupture ou une soupape. Les gaz évacués sont alors canalisés et orientés de manière à protéger le personnel qui pourrait être à proximité immédiate du tableau lors du défaut.

En pratique, le transformateur comprend une partie active, constituée d'un circuit magnétique et d'enroulements électriques, le tout étant généralement immergé dans un bain d'huile et placé dans une cuve parallélépipédique. Afin de permettre la dissipation thermique des pertes générées par le transformateur en service, cette cuve comprend sur certaines de ses parois verticales des ondulations qui agissent comme des radiateurs. Le dessus de la cuve est constitué d'un couvercle sur lequel sont positionnées les bornes de raccordement moyenne et basse tensions.

Dans les postes conventionnels, le tableau MT et le transformateur MT/BT sont des appareils distincts qui doivent être reliés électriquement par une liaison polyphasée constituée d'un câble électrique MT isolé et de connecteurs de raccordement.

Cette pratique présente l'inconvénient d'exiger une surface au sol importante, d'où découle l'encombrement des postes de transformation actuels.

Par ailleurs, elle impose pour chacun des appareils précédents une structure porteuse et une fixation au sol.

Enfin, une liaison électrique MT d'une longueur qui peut atteindre plusieurs mètres doit également être prévue entre les deux appareils.

Le document FR-A-2 782 418 décrit un ensemble composé d'un transformateur MT/BT, d'un appareillage MT et d'un appareillage BT où les appareillages MT et BT sont disposés côte à côte de manière à occuper le moins de place possible, et où le transformateur MT/BTR est disposé contre les appareillages accolés.

Le document DE-198 21 592 décrit un ensemble composé notamment d'un transformateur MT/BT et d'un appareillage MT, l'appareillage MT étant disposé dans un compartiment situé au-dessus du compartiment enfermant le transformateur MT/BT conformément au préambule de la revendication 1.

L'invention propose donc de résoudre le problème mentionné ci-avant en permettant une réduction importante du volume et du coût d'un poste de transformation MT/BT grâce à une association directe entre le tableau MT et le transformateur.

A cet effet, l'invention porte sur un ensemble conformément à la revendication 1.

En pratique, dans la relation géométrique du type superposition, le tableau MT est disposé au moins partiellement au dessus du transformateur MT/BT.

Cette superposition doit résoudre au moins deux difficultés qui constituent deux préjugés à surmonter pour l'homme du métier.

La première difficulté est de nature thermique. En effet, la température en partie supérieure d'un transformateur immergé dans l'huile minérale peut atteindre jusqu'à 100°C en service. Le transfert thermique qui en résulte pourrait être préjudiciable au bon fonctionnement du tableau, en soumettant les contacts électriques internes à des températures telles que leur fonctionnalité serait dégradée si des dispositions particulières n'étaient pas adoptées.

La deuxième difficulté concerne l'évacuation des gaz résultant d'un éventuel défaut interne au tableau MT. Dans le but d'assurer la sécurité du personnel lors d'une telle occurrence, il est généralement souhaitable de diriger ces gaz après leur sortie de la cuve du tableau vers le soubassement du transformateur. Ils peuvent ainsi se détendre dans le fond du poste de transformation et se refroidir au contact des ondes du transformateur lors de leur remontée. Or, la position du tableau MT sur le transformateur ne permet pas a priori de réaliser cette fonction de manière aisée.

En variante, dans la relation géométrique du type juxtaposition, le tableau MT est disposé au moins partiellement à côté du transformateur MT/BT.

La présence de moyens de réduction de transfert thermique permet au tableau MT de fonctionner normalement à proximité du transformateur MT/BT.

Ainsi, le poste de transformation présente une surface au sol moindre que les postes de transformation conventionnels, s'intègre plus aisément à son environnement immédiat et présente un moindre coût grâce à l'association et la proximité du tableau MT et du transformateur MT/BT.

Selon l'invention des moyens de liaison électrique directe rendent solidaires électriquement le tableau MT et le transformateur MT/BT.

Des moyens de liaison mécaniques permettent de rendre solidaires le tableau MT et le transformateur BT.

Dans le cadre d'un mode de réalisation avantageuse, on réduit le transfert thermique par conduction à l'aide d'un espace d'air séparant le transformateur du tableau MT.

Selon un second mode de réalisation de l'ensemble selon l'invention, on réduit le transfert thermique par rayonnement à l'aide d'une surface réfléchissante.

Afin d'améliorer les propriétés d'isolation thermique, une partie de l'espace d'air peut être empli d'un matériau isolant thermique.

Le tableau MT peut donc être superposé sur le transformateur MT/BT sans souffrir du transfert thermique dû à la température atteinte par le transformateur MT/BT.

Concernant la difficulté d'évacuation des gaz, l'ensemble peut comprendre des moyens de limitation de pression traversant les moyens de réduction du transfert thermique de sorte que des gaz apparaissant dans le tableau MT sont évacués hors du tableau MT vers le bas du transformateur MT/BT.

L'invention porte également sur un poste de transformation électrique MT/BT comprenant une enveloppe, un tableau de distribution BT et un ensemble comprenant un transformateur MT/BT et un tableau MT superposés.

D'autres caractéristiques et avantages de l'invention apparaîtront à la lumière de la description ci-après, description effectuée en référence aux figures annexées dans lesquelles :
- la figure 1 est une vue partielle en coupe d'un poste de transformation comprenant un ensemble comprenant un tableau MT et un transformateur MT/BT superposés ;
- la figure 2 est une vue de l'ensemble de la figure 1 pourvu de moyens de réduction de transfert thermique ;
- la figure 3 est une vue partielle de l'ensemble de la figure 2, l'ensemble étant pourvu de moyens de transfert thermique supplémentaires ;
- la figure 4 est une vue conforme à la figure 1, l'ensemble étant pourvu de moyens de réduction du transfert thermique et de moyens d'évacuation de gaz;
- la figure 5 est une vue partielle de l'espace compris entre le tableau MT et le transformateur MT/BT, et des clapets dont il est pourvu.

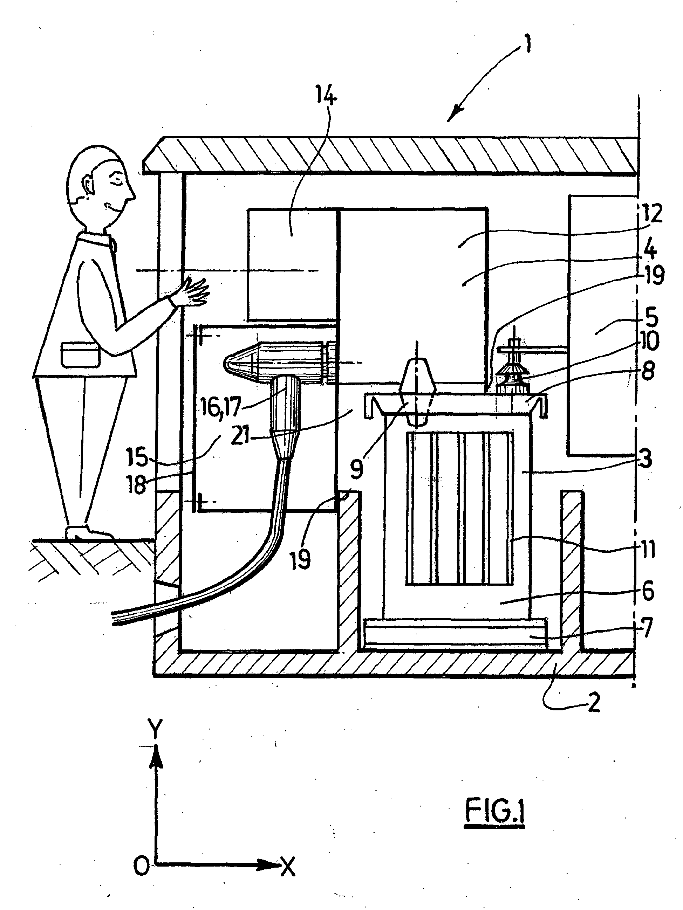

En référence à la figure 1, l'extérieur d'un poste de transformation électrique 1 moyenne tension / basse tension (MT/BT) est formé d'une enveloppe de poste 2.

L'enveloppe 2 présente des ouvertures notamment pour le personnel exploitant, pour la ventilation (non représentée) ainsi que pour permettre le passage de câbles.

L'enveloppe 2 comprend trois principaux éléments de type connu : un transformateur MT/BT 3, un tableau MT 4 et un tableau de distribution BT 5.

Le transformateur 3 a une forme générale de parallélépipède.

Le transformateur 3 comprend une cuve 6, un soubassement 7 et un couvercle 8 équipé de bornes de raccordement MT 9 et de bornes BT10.

Le soubassement 7 et le couvercle 8 sont en débordement par rapport à la cuve 6 selon la direction OX.
Le transformateur 3 comprend une partie active, non représentée, comprenant un circuit magnétique et des enroulements électriques, généralement immergés dans un bain d'huile et placés dans la cuve 6.

Afin de permettre la dissipation thermique des pertes générées par le transformateur 3 en service, la cuve 6 comprend sur certaines de ses parois verticales des ondulations 11 qui agissent comme des radiateurs.

L'air circule de bas en haut le long du transformateur 3. La convection naturelle de l'air le long des parois du transformateur 3 permet son refroidissement.

Le tableau 4 comprend une cuve 12 étanche dans laquelle sont situés des organes de manoeuvre tels que des interrupteurs et des sectionneurs (non représentés).

Sous la cuve 12 se situent des moyens 13 de limitation de la pression interne (non représentés sur la figure 1) qui , en cas de besoin, permettent au gaz résultant d'un défaut interne à la cuve 12 de s'échapper.

Le tableau 4 comprend également un compartiment 14 regroupant les commandes mécaniques des organes de manoeuvre sur lesquels peut agir le personnel. Le compartiment 14 est adjacent à la cuve 12.

Le haut de la cuve 12 et le haut du compartiment 14 sont sensiblement au même niveau selon la direction verticale OY.

Le tableau 4 comprend également des compartiments d'accès 15 dans lesquels sont situés les bornes solidaires 16 de la cuve 12 et des connecteurs séparables 17 solidaires du réseau alimentant le tableau 4. Ces compartiments 15 sont obturés par des capots 18.

Les compartiments d'accès 15 sont adjacents à la cuve 12 et au compartiment 14. Les compartiments d'accès 15 sont placés sous le compartiment 14. Le fond des compartiments 15 est plus bas que le fond de la cuve 12.
Une paroi des compartiments 15 et le fond de la cuve 12 forment un angle droit.

Le tableau 4 et le transformateur 3 forme un ensemble E dans lequel le tableau 4 est disposé au dessus du transformateur 3.

Le tableau 4 est positionné par rapport au transformateur 3 au moyen de supports 19.

Dans d'autres modes de réalisation non représentés, le tableau 4 et le transformateur 3 peuvent être disposés différemment l'un par rapport à l'autre.

Par exemple, le tableau 4 peut être décalé vers la gauche ou vers la droite selon la direction OX. De même, le tableau 4 peut être à une distance plus ou moins grande du transformateur 3, selon la direction OY.

En variante, le tableau 4 et le transformateur 3 peuvent être placés l'un à côté de l'autre.

Quelle que soit la position relative du tableau 4 par rapport au transformateur 3, des moyens (21, 21a, 21b, 22) de réduction du transfert thermique sont prévus entre les deux éléments et leur forme prend en compte leur disposition l'un par rapport à l'autre.

Afin de réduire l'emprise visuelle du poste de transformation 1 ou encore de respecter les exigences d'ergonomie lors des manoeuvres effectuées par le personnel qui intervient sur les commandes situées au niveau du compartiment 14, le poste 1 peut être semi-enterré.

Une traversée de paroi polyphasée 20 permet de raccorder électriquement le tableau 4 et le transformateur 3.

La traversée 20 est intégrée à la fois à la cuve 12 et au transformateur 3. Plus précisément, dans le transformateur 3, elle traverse le couvercle 8 et atteint la cuve 6.

Dans le transformateur 3, la traversée 20 se connecte aux bornes de raccordement MT 9.

Selon la direction horizontale OX, la traversée 20 est placée sur le couvercle 8 du côté opposé à celui où se trouve les bornes BT10.

Le tableau 4 est placé en porte à faux par rapport au transformateur 3.

La cuve 12 n'est pas placée au dessus du côté du couvercle 8 portant les bornes BT 10. Mais la cuve 12 est située au dessus du reste du couvercle 8 et déborde du côté opposé.

Ainsi un espace 21 est ménagé entre le transformateur 3 et l'angle formé par la cuve 12 et les compartiments 15 du tableau 4.

L'épaisseur de l'espace 21 est compris entre 50 mm et 200 mm selon l'axe OX et entre 20 mm et 100 mm selon l'axe OY.

L'espace 21 est ainsi traversé par la traversée 20.

L'espace 21 constitue une zone d'isolation permettant de réduire le transfert de chaleur entre le transformateur 3 et le tableau 4, cet espace comprenant une partie supérieure horizontale et une partie inférieure verticale.

En effet, dans le transformateur 3, la température peut atteindre une centaine de degrés, ce qui est très supérieur à la température de fonctionnement du tableau 4 qui comprend des composants sensibles, dont des contacts électriques.

Généralement, la température dans l'environnement immédiat du tableau 4 ne doit pas dépasser 40°C.

On n'a pas représenté sur la figure 1 les moyens de réduction 21, 21a, 21b, 22 de transfert thermique ni les moyens 13 de limitation de pression.

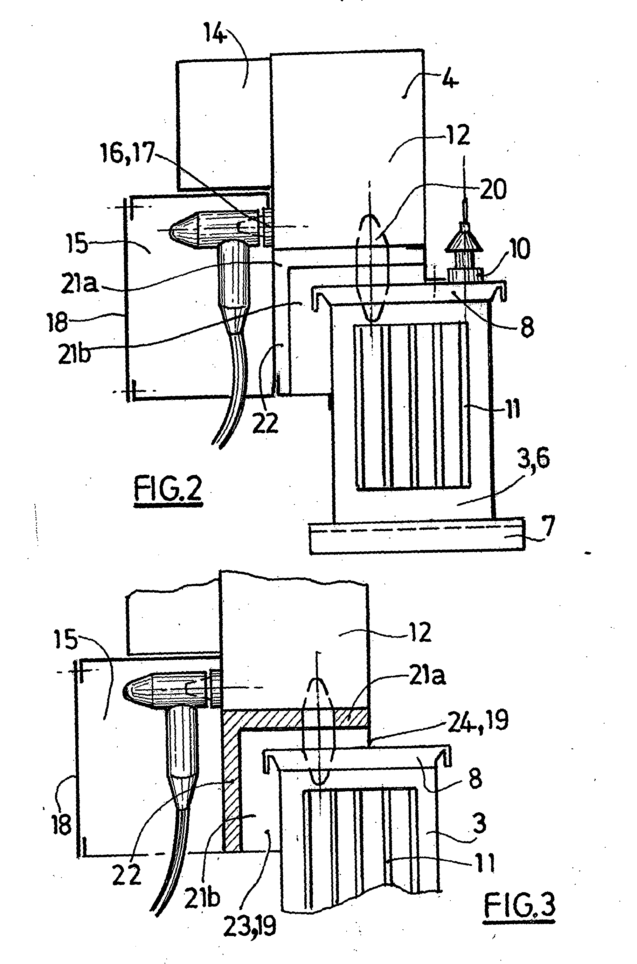

Selon une première variante représentée sur la figure 2, l'espace 21 est divisé en deux espaces distincts 21 a et 21b par une tôle d'aluminium 22.

On peut également utiliser une autre surface réfléchissante constituée de tout matériau évitant un transfert thermique par rayonnement. La surface réfléchissante a la forme adéquate permettant de diviser selon son épaisseur l'espace 21 en les deux espaces 21a, 21b.

Cette surface réfléchissante 22 permet la réduction du transfert thermique par rayonnement.

Selon une autre variante représentée sur la figure 3, l'espace 21a est comblée à l'aide d'une couche de laine minérale.

On peut utiliser également une autre matière isolante.

L'épaisseur de l'espace 21a comblé de laine minérale est sensiblement la moitié de l'épaisseur de l'espace 21.

Suivant les propriétés isolantes de la matière utilisée, l'épaisseur de l'espace 21a est plus ou moins importante.

Cet ajout permet d'obtenir une réduction de transfert thermique par conduction plus efficace qu'une simple couche d'air.

L'espace 21a est maintenu sensiblement étanche par des moyens d'étanchéité adéquats, l'espace 21b présentant au contraire une ouverture basse 23 et une ouverture haute 24, en vue d'assurer une ventilation par convection naturelle du transformateur 3.
L'ouverture 23 est située selon la direction OY à la moitié de la hauteur du transformateur 3. L'ouverture 24 est située au dessus du transformateur 3 à proximité des bornes BT 10.

De telles ouvertures 23, 24 peuvent être prévues sur la variante représentée sur la figure 2.

Sous la cuve 12 se situent les moyens 13 de limitation de pression interne.

Ces moyens 13 de limitation de pression interne peuvent être un point faible aménagé dans la paroi de la cuve 12, un disque de rupture ou une soupape.

En cas de défaut interne du tableau 4, des gaz peuvent être produits. Les moyens 13 de limitation de pression interne permettent de les évacuer vers le bas du transformateur 3 à partir d'où ils peuvent reprendre le cheminement normal de l'air du bas vers le haut.

Ces moyens 13 de limitation de pression interne traversent l'espace 21, 21a, 21b. L'espace 21b présente également une ouverture basse 23 ce qui permet d'évacuer et de canaliser les gaz vers le soubassement du transformateur 3. Dans ce cas, il n'est pas prévu d'ouverture haute 24.

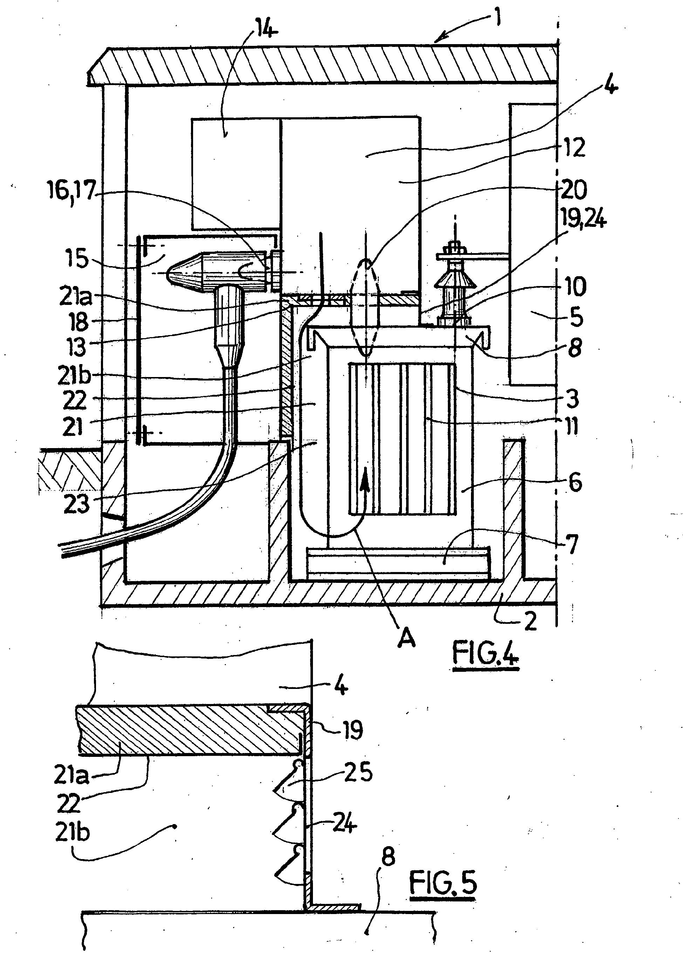

Les moyens 13 de limitation de pression interne ne sont représentés que sur la figure 4 mais il est possible de les intégrer aux variantes des figures 2 et 3.

La figure 5 présente une variante selon laquelle l'espace 21b présente une ouverture haute 24 pourvue de moyens d'obturation tels que des clapets 25 comprenant des lames possédant un effet ressort qui leur donne en fonctionnement normal une position ouverte, orientée vers l'intérieur de l'espace 21b.

Les clapets 25 se referment sous l'effet de la pression apparaissant dans l'espace 21b lorsque des gaz sont évacués du tableau 4 par les moyens de limitation de pression.

Ainsi, les gaz sont bien évacués vers le soubassement 7 du transformateur 3 dans l'éventualité d'un défaut interne au tableau 4 et reprennent ensuite le cheminement normal de l'air (flèche A).

Tant que la pression dans l'espace 21b est normale, les clapets 25 sont ouverts et permettent l'établissement d'une circulation d'air. En cas de fonctionnement du dispositif 13 de limitation de la pression dans la cuve 12, la pression s'élève dans l'espace 21b, provoque la fermeture des clapets 25. Les gaz résultant du défaut interne à la cuve 12 sont donc orientés vers le bas du transformateur 3 en empruntant l'ouverture basse 23.

## Revendications

1. Ensemble (E) destiné à un poste (1) de transformation électrique moyenne tension / basse tension (MT/BT) comprenant un transformateur (3) MT/BT et un tableau (4) moyenne tension (MT), ledit tableau (4) MT comprenant des organes de manouvre tels qu'interrupteurs et sectionneurs, un ensemble de commandes mécaniques actionnant lesdits organes de manouvre et des moyens de raccordement (16, 17) à un réseau électrique, le tableau (4) MT et le transformateur (3) MT/BT étant associés l'un a l'autre selon une relation géométrique du type superposition, l'ensemble comprenant aussi des moyens (21, 21 a, 21 b, 22) de réduction de transfert thermique dû a l'échauffement en service du transformateur (3) MT/BT intercalés entre le transformateur (3) MT/BT et le tableau (4) MT ainsi associés, des moyens (20) de liaison électrique directe qui rendent solidaires électriquement le tableau (4) MT et le transformateur (3) MT/BT) et des moyens de liaison mécanique qui (19) rendent solidaires mécaniquement le tableau (4) MT et le transformateur (3) MT/BT,
**caractérisé en ce que**
lesdits moyens de liaison électrique comprennent une traversée de paroi polyphasée (20) intégrée à la fois à la cuve (12) du tableau (4) MT et au transformateur (3) et **en ce qu'**il comprend des moyens (13) de limitation de pression traversant los moyens (21, 21 a, 21 b, 22) de réduction du transfert thermique de sorte que des gaz apparaissant dans le tableau (4) MT sont évacues hors du tableau (4) MT vers le bas du transformateur (3) MT/BT.

2. Ensemble (E) selon la revendication 1, **caractérisé en ce que**, dans la relation géométrique du type superposition, le tableau (4) MT est disposé au moins partiellement au dessus du transformateur (3) MT/BT.

3. Ensemble (E) selon l'une des revendications 1 ou 2, **caractérisé en ce que**, dans la relation géométrique du type superposition et juxtaposition, le tableau (4) MT est disposé au moins partiellement à côté du transformateur (3) MT/BT.

4. Ensemble (E) selon l'une des revendications 1 à 3, **caractérisé en ce que** les moyens (21, 21a, 21b, 22) de réduction du transfert thermique sont une surface réfléchissante (22) destinée à réduire le transfert thermique par rayonnement.

5. Ensemble (E) selon l'une des revendications 1 à 4, **caractérisé en ce que** les moyens (21, 21a, 21b. 22) de réduction du transfert thermique comprennent un espace d'air (21) séparant le transformateur (3) du tableau (4) MT destiné à réduire le transfert thermique par conduction et une surface réfléchiasante (22) destinée à réduire le transfert thermique par rayonnement

6. Ensemble (E) selon la revendication 5, **caractérisé en ce que** la surface réfléchissante (22) sépare l'espace d'air en deux espaces distincts (21a, 21b), un premier espace (21a) situé le long du tableau (4) MT, un second espace (21 b) situé le long du transformateur (3).

7. Ensemble (E) selon la revendication 6, **caractérisé en ce que** le premier espace (21a) est empli d'un matériau isolant thermique.

8. Ensemble (E) selon l'une des revendication 6 à 7, **caractérisé en ce que** le second espace (21b) comprend une ouverture basse (23) servant d'entrée d'air froid et une ouverture haute (24) servant de sortie d'air chaud de façon à permettre une ventilation par convection naturelle le long d'une partie du transformateur (3).

9. Ensemble (E) selon la revendication 8, **caractérisé en ce que** le second espace (21b) comprend en son extrémité supérieure des moyens d'obturation (25).

10. Poste (1) de transformation électrique MT/BT comprenant une enveloppe (2) dans laquelle sont installés un tableau (5) de distribution basse tension et un ensemble (E) selon l'une des revendications précédentes.

## Claims

1. Assembly (E) designed for a medium voltage / low voltage (MV/LV) electricity transformer station (1) comprising a MV/LV transformer (3) and a medium voltage (MV) panel (4), said MV panel (4) comprising operating elements such as switches or disconnecting switches, an assembly of mechanical controls activating said operating elements and means for connecting (16, 17) to an electricity grid, the MV panel (4) and the MV/LV transformer (3) being associated with one another according to a chosen geometric relation of superimposition, the assembly also comprising means (21, 21a, 21b, 22) for reducing the heat transfer due to the MV/LV transformer (3) heating up during service inserted between the MV/LV transformer (3) and the MV panel (4) thus associated, means (20) for direct electrical connection which provide an electric connection between the MV panel (4) and the MV/LV transformer (3) and mechanical connection means (19) which provide a mechanical connection between the MV panel (4) and the MV/LV transformer (3),
**characterised in that**
said electrical connection means (20) comprise a polyphase wall bushing (20) simultaneously formed integral with the shell (12) of the MV panel (4) and the transformer (3) and **in that** it comprises means (13) for limiting the pressure passing through the means (21, 21a, 21b, 22) for reducing the heat transfer so that gas appearing in the MV panel (4) is evacuated outside of the MV panel (4) towards the bottom of the MV/LV transformer (3).

2. Assembly (E) according to claim 1, **characterised in that**, in the geometrical relation of superimposition, the MV panel (4) is positioned at least partially above the MV/LV transformer (3).

3. Assembly (E) according to one of the claims 1 or 2, **characterised in that**, in the geometrical relation of superimposition and juxtaposition, the MV panel (4) is positioned at least partially beside the MV/LV transformer (3).

4. Assembly (E) according to one of the claims from 1 to 3, **characterised in that** the means (21, 21a, 21b, 22) for reducing the heat transfer consist of a reflecting surface (22) intended to reduce the heat transfer by radiation.

5. Assembly (E) according to one of the claims from 1 to 4, **characterised in that** the means (21, 21a, 21b, 22) for reducing the heat transfer consist of an air gap (21) separating the transformer (3) from the MV panel (4) intended to reduce the heat transfer by conduction and a reflecting surface (22) intended to reduce the heat transfer by radiation.

6. Assembly (E) according to claim 5, **characterised in that** the reflecting surface (22) divides the air gap into two distinct spaces (21a, 21b), a first space (21a) located along the MV panel (4), a second space (21b) located along the transformer (3).

7. Assembly (E) according to claim 6, **characterised in that** the first space (21a) is filled with a heat-insulating material.

8. Assembly (E) according to one of the claims 6 to 7, **characterised in that** the second space (21b) comprises an opening at the bottom (23) serving as a cold-air intake and an opening at the top (24) serving as a hot-air outlet, so as to allow ventilation by natural convection along one part of the transformer (3).

9. Assembly (E) according to claim 8, **characterised in that** the second space (21b) comprises blocking means (25) at its top end.

10. MV/LV electricity transformer station (1) comprising an enclosure (2) in which a low-voltage electrical panel (5) and an assembly (E) according to one of the preceding claims are installed.

## Patentansprüche

1. Ein Ensemble(E) für einen Posten (1) für die elektrische Umspannung zwischen Mittelspannung / Niederspannung (MS/NS), das einen Transformator (3) MS/NS und eine Schalttafel (4) für mittlere Spannung (MS) hat, wobei die besagte Tafel (4) MS Betätigungsorgane wie Ein- und Ausschalter aufweist, wobei ein Ensemble mit mechanischen Betätigungsgliedern die besagten Betätigungsorgane und Anschlußmittel (16, 17) an ein Stromnetz betätigt, wobei die Tafel (4) MS und der Transformator (3) MS/NS) mit einer geometrischen Verbindung von der Art einer Übereinanderschichtung miteinander verbunden sind, wobei das Ensemble auch Mittel (21, 21a, 21b, 22) zur Reduzierung des Wärmetransfers umfaßt, die auf die Betriebswärme des Transformators (3) MS/BS zurückzuführen ist, die sich zwischen dem somit verbundenen Transformator (3) MS/BS und der Schalttafel (4) MS befinden, Mittel (2) der direkten elektrischen Verbindung, die die Schalttafel (4) MS und den Transformator (3) MS/NS fest verbinden und mechanische Verbindungsmittel (19), die die Tafel (4) MS und den Transformator (3) MS/BS fest miteinander verbinden, **dadurch gekennzeichnet, daß** die besagten Mittel zur elektrischen Verbindung eine mehrphasige Wanddurchführung (20) umfassen, die sowohl im Gestell (12) der Tafel (4) MS als auch am Transformator (3) eingebunden sind, und **dadurch**, daß es auch Mittel (13) zur Begrenzung des Drucks umfaßt, der die Mittel (21, 21an 21b, 22) durchquert, zur Reduzierung des Wärmetransfers, damit die auf den Tafel (4) MS erscheinenden Gase aus der Tafel (5) MS zum unteren Teil des Transformators (3) MS/BS ausgetragen werden.

2. Ensemble(E) nach Anspruch 1, **dadurch gekennzeichnet, daß** in der geometrischen Verbindung von der Art Übereinanderschichtung die Tafel (4) MS zumindest teilweise über dem Transformator (3) MS/BS angeordnet ist.

3. Ensemble(E) nach einem beliebigen der vorstehenden Ansprüche 1 oder 2, **dadurch gekennzeichnet, daß** in der geometrischen Verbindung von der Art Übereinanderschichtung und dem Nebeneinanderliegen die Tafel (4) MS zumindest teilweise neben dem Transformator (3) MS/BS angeordnet ist.

4. Ensemble(E) nach einem beliebigen der vorstehenden Ansprüche 1 bis 3, **dadurch gekennzeichnet, daß** die Mittel (21, 21a, 21b, 22) zur Reduzierung des Wärmetransfers eine reflektierende Fläche (22) sind, die den Wärmetransfer durch Strahlung reduzieren soll.

5. Ensemble(E) nach einem beliebigen der vorstehenden Ansprüche 1 bis 4, **dadurch gekennzeichnet, daß** die Mittel (21, 21a, 21b, 22) zur Reduzierung des Wärmetransfers einen Luftraum (21) umfassen, der den Transformator (3) von der Tafel (4) MS trennt, der den Wärmetransfer durch Leitung und eine reflektierende Fläche (22) durch Strahlung reduzieren soll.

6. Ensemble (E) nach Anspruch 5, **dadurch gekennzeichnet, daß** die reflektierende Fläche (22) den Luftraum in zwei getrennte Räume (21a, 21b) aufteilt, wobei sich ein erster Raum (21a) entlang der Tafel (4) MS befindet und ein zweiter Raum (21b) den Transformator (3) entlang.

7. Ensemble (E) nach Anspruch 6, **dadurch gekennzeichnet, daß** der erste Raum (21a) mit einem Wärmeisoliermaterial gefüllt ist.

8. Ensemble (E) nach einem beliebigen der vorstehenden Ansprüche 6 bis 7, **dadurch gekennzeichnet, daß** der zweite Raum (21b) eine untere Öffnung (23) umfaßt, die als Kaltlufteingang dient, und eine obere Öffnung (24), die als Heißluftausgang dient, so daß eine Belüftung durch natürliche Konvektion entlang eines Teils des Transformators (3) möglich wird.

9. Ensemble (E) nach Anspruch 8, **dadurch gekennzeichnet, daß** der zweite Raum (21b) an seinem oberen Ende Verschlußmittel (25) hat.

10. Posten (1) für die elektrische Umspannung (MS/NS), der ein Gehäuse (2) umfaßt, in dem eine Niederspannungs-Versorgungstafel (5) und ein Ensemble(E) nach einem beliebigen der vorstehenden Ansprüche untergebracht sind.
